(19) Europäisches Patentamt
European Patent Office
Office européen des brevets

(11) **EP 2 294 750 B1**

(12) **FASCICULE DE BREVET EUROPEEN**

(45) Date de publication et mention
de la délivrance du brevet:
**25.01.2012 Bulletin 2012/04**

(21) Numéro de dépôt: **09784424.5**

(22) Date de dépôt: **23.06.2009**

(51) Int Cl.:
**H04L 9/08** (2006.01)

(86) Numéro de dépôt international:
**PCT/FR2009/051199**

(87) Numéro de publication internationale:
**WO 2010/004162 (14.01.2010 Gazette 2010/02)**

(54) **PROCEDE ET SYSTEME TRACABLES DE DIFFUSION DE DONNEES NUMERIQUES**

VERFOLGBARES VERFAHREN UND SYSTEM ZUM AUSSTRAHLEN VON DIGITALEN DATEN

TRACEABLE METHOD AND SYSTEM FOR BROADCASTING DIGITAL DATA

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **25.06.2008 FR 0854236**

(43) Date de publication de la demande:
**16.03.2011 Bulletin 2011/11**

(73) Titulaire: **France Telecom**
**75015 Paris (FR)**

(72) Inventeurs:
• **BILLET, Olivier**
**F-06140 Tourrettes Sur Loup (FR)**
• **BENADJILA, Ryad**
**F-75020 Paris (FR)**

(56) Documents cités:
**FR-A- 2 856 539**

• **GOLDREICH O ET AL: "HOW TO CONSTRUCT RANDOM FUNCTIONS" JOURNAL OF THE ACM, ACM, NEW YORK, NY, US, vol. 33, no. 4, 1 janvier 1986 (1986-01-01), pages 792-807, XP000878748 ISSN: 0004-5411 cité dans la demande**

**Description**

L'invention concerne un procédé et un système de diffusion de données numériques. Ce procédé et ce système sont traçables, et résistants aux attaques en boîte blanche.

Dans le contexte du déploiement des réseaux de communications et des services audiovisuels, la distribution de contenus numériques devient problématique sur le plan des droits de propriété intellectuelle. En effet, la recopie de données numériques en très grand nombre, ainsi que leur redistribution à grande échelle, est devenue à la fois facile et peu coûteuse pour les particuliers. Par exemple, les industries dont les bénéfices reposent sur la fourniture de données numériques (comme la musique, la vidéo, les livres électroniques, les logiciels de jeux, et ainsi de suite) souhaitent protéger ces données numériques contre une utilisation sortant du cadre défini par un contrat commercial entre fournisseur et consommateur de contenu numérique ; c'est l'objet de la gestion des droits numériques (en anglais, "*Digital Rights Management*" ou DRM). Pour une présentation générale des problèmes liés à la protection des logiciels, on pourra consulter l'article de P.C. van Oorschot intitulé "Revisiting Software Protection" (Actes de la 6ème Conférence Internationale "Information Security", pages 1 à 13, Springer-Verlag, 2003).

Pour lutter contre la redistribution frauduleuse, par un ou plusieurs consommateurs de contenu légitimes, des identifiants secrets, ou des logiciels de décodage eux-mêmes, contenus dans leur équipement de décodage ("décodeur", ou "*set-top box*" en anglais) -- cette redistribution permettant à des consommateurs illicites (appelés "pirates") d'accéder aux contenus en clair -- on met en oeuvre des procédés dits de "traçage des traîtres". Le concept, et certaines techniques, de traçage des traîtres ont été proposés par B. Chor, A. Fiat et M. Naor dans leur article intitulé "Tracing Traitors" (Advances in Cryptology - Crypto'94, Lecture Notes in Computer Science, vol. 839, pages 257 à 270, Springer-Verlag, 1994).

Les procédés de traçage des traîtres garantissent que, si une telle fraude se produit, l'identité de l'un au moins des consommateurs légitimes qui sont à l'origine de la fraude (dits "traîtres") peut être reconstituée par le fournisseur de contenus (ou par une autorité de contrôle) à partir des données redistribuées aux consommateurs illicites. Les systèmes de chiffrement/déchiffrement dans lesquels un procédé de traçage des traîtres peut être mis en oeuvre sont dits "traçables".

Ces techniques sont habituellement de nature combinatoire, c'est-à-dire que chaque consommateur de contenu légitime se voit attribuer un identifiant secret personnel faisant partie d'un ensemble (généralement assez grand) d'identifiants secrets. Les données diffusées dans ce système comprennent des messages chiffrés. Chaque message chiffré comprend :

- un cryptogramme $C_r(M)$ formé à partir d'un contenu $M$ chiffré à l'aide d'une clé de chiffrement de contenu dépendant d'un paramètre $r$ dont on fait périodiquement varier la valeur afin de faire varier ladite clé de chiffrement, et

- un ou plusieurs en-tête(s) contenant certaines informations chiffrées en fonction desdits identifiants.

Les données diffusées dans ce système comprennent également, en clair, la valeur courante dudit paramètre $r$.

Lorsqu'un consommateur de contenu reçoit l'un de ces messages, il déchiffre à l'aide de son identifiant personnel et du paramètre $r$ lesdites informations chiffrées. Il combine alors les informations ainsi déchiffrées pour obtenir la clé $K_r$ de déchiffrement du contenu, puis il utilise cette clé

$K_r$ de déchiffrement du contenu pour déchiffrer ledit cryptogramme $C_r(M)$. La clé $K_r$ de déchiffrement du contenu est habituellement appelée "mot de contrôle" dans les systèmes de consommation payante d'un contenu audiovisuel diffusé.

Dans un système de chiffrement/déchiffrement "traçable", si l'un des consommateurs de contenu légitimes communique son identifiant personnel à un consommateur illicite, il est possible de retrouver l'identité du traître à partir de l'identifiant personnel mis en oeuvre par le consommateur illicite.

Toutefois, les procédés de traçage des traîtres de nature combinatoire présentent l'inconvénient qu'il est nécessaire de diffuser un volume considérable d'en-têtes.

On connaît, d'après la demande européenne n° 1 634 405, un procédé de procédé de chiffrement/déchiffrement de données numériques diffusées ne nécessitant pas la diffusion d'un nombre important d'en-têtes. Selon ce procédé :

- lors du chiffrement du contenu à diffuser, l'émetteur met en oeuvre au moins une première fonction cryptographique secrète, et

- lors du déchiffrement du contenu, tous les décodeurs mettent en oeuvre au moins une même seconde fonction cryptographique secrète inverse de ladite première fonction, chaque décodeur faisant appel à cet effet à une description mathématique de ladite seconde fonction enregistrée dans une mémoire.

Lors de la mise en oeuvre de la seconde fonction, la description mathématique de cette seconde fonction à laquelle chaque décodeur fait appel est différente d'un décodeur à l'autre, de manière à ce que la description mathématique à laquelle il est fait appel identifie de façon unique chaque décodeur particulier parmi l'ensemble des décodeurs.

Dans le procédé ci-dessus, il est possible de retrouver un traître qui aurait communiqué la description mathématique de sa seconde fonction secrète à un consommateur illicite, à partir de l'analyse de la description mathématique de cette seconde fonction mise en oeuvre par le consommateur illicite pour déchiffrer les données transmises. En effet, par construction de chaque description mathématique du système, celle-ci est représentative de l'identité du traître.

De plus, dans le procédé ci-dessus, grâce au fait que l'identification d'un traître repose non plus sur la mise en oeuvre d'identifiants personnels, mais sur la mise en oeuvre de descriptions différentes d'une même fonction cryptographique, le nombre d'en-têtes nécessaires pour diffuser un message chiffré est inférieur au nombre d'en-têtes nécessaires pour diffuser le même message chiffré à l'aide d'un procédé combinatoire classique.

Le procédé décrit succinctement ci-dessus présente toutefois l'inconvénient qu'il n'offre qu'une faible protection contre les attaques dites "en boîte-blanche".

En effet, pour un utilisateur indélicat d'un logiciel de décodage, une autre façon de se comporter en "traître" qu'en redistribuant son logiciel consiste à analyser les étapes principales mises en oeuvre dans ce logiciel, pour pouvoir ensuite fabriquer un logiciel contrefaisant qui soit

- essentiellement équivalent au logiciel copié quant à ses capacités de déchiffrement, mais
- suffisamment différent du logiciel copié pour que cette contrefaçon soit difficile à détecter par le fournisseur de contenus (ou une autorité de contrôle).

En outre, le logiciel contrefaisant sera plus facile à distribuer par le traître que le logiciel copié si le logiciel contrefaisant est de taille plus réduite que le logiciel copié.

Ce contexte de piratage est appelé "contexte d'attaque en boîte-blanche", d'après l'article de S. Chow, P. Eisen, H. Johnson et P.C. van Oorschot intitulé "White-Box Cryptography and an AES Implementation" (Actes du "International Workshop on Selected Areas in Cryptography", Springer, pages 250 à 270, 2003), et à l'article des mêmes auteurs intitulé "A White-Box DES Implementation for DRM Applications" (Actes du "Second ACM Workshop on Digital Rights Management", Springer, pages 1 à 15, 2003). Cette dénomination souligne la différence de ce contexte avec celui, bien connu, de la "boîte-noire", dans lequel un pirate cherchant à analyser un logiciel ne peut observer que des couples (données d'entrée)/(données de sortie) associés à ce logiciel, sans avoir accès aux étapes de traitement intermédiaires mises en oeuvre par le logiciel ; dans le contexte d'une attaque en boîte-blanche au contraire, le pirate peut observer étape par étape l'exécution dynamique d'un logiciel, et même modifier des instructions de ce logiciel pour pouvoir étudier les conséquences de ces modifications sur le traitement effectué par le logiciel.

Notamment, un attaquant en boîte-blanche peut chercher à retrouver les valeurs de clés secrètes enregistrées dans un logiciel, afin d'utiliser ces clés secrètes dans un logiciel équivalent dont dispose l'attaquant (en effet, l'algorithme mis en oeuvre par le logiciel est souvent connu dans ses étapes principales), ou sur une autre plateforme informatique. La protection de ces clés secrètes est donc essentielle, mais rendue d'autant plus difficile que les clés cryptographiques obéissent généralement à un format bien particulier qui les distingue des autres données enregistrées, ce qui permet à un pirate de les repérer assez facilement.

La présente invention concerne donc, en premier lieu, un procédé d'obtention par un utilisateur d'une valeur dérivée $K_r$ de $m$ bits, dans lequel, étant donné deux fonctions pseudo-aléatoires $g_0$ et $g_1$ de $m$ bits vers $m$ bits, ledit utilisateur obtient, à partir d'un paramètre d'entrée constitué par un mot $r$ de n bits, une valeur dérivée

$$K_r = g_{r_n} \circ \ldots g_{r_2} \circ g_{r_1}(S),$$

où, pour $i = 1,\ldots, n$, $g_{r_i} = g_0$ si $r_i = 0$, et $g_{r_i} = g_i$ si $r_i = 1$, et où $S$ est une valeur maîtresse de $m$ bits. Ledit procédé est remarquable en ce que ladite valeur maîtresse $S$ n'est pas divulguée audit utilisateur, et en ce qu'il comprend les étapes suivantes :

- on recherche, parmi un ensemble de mots de in bits $U_j$, où $j = 1,\ldots, p$, enregistrés dans une table $T^U$ et valant

$$U_j = g_{v_{l(j)}(j)} \circ \ldots g_{v_2(j)} \circ g_{v_1(j)}(S),$$

où, pour $i = 1,...,l\,(j)$, les indices $v_i^{(j)}$ sont des bits prédéterminés, un mot $U_\sigma$ valant

$$U_\sigma = g_{r_{l(\sigma)}} \circ ... \, g_{r_2} \circ g_{r_1}\,(S),$$

et

- on obtient ladite valeur dérivée $K_r$ en calculant

$$K_r = g_{r_n} \circ ... \, g_{r_{l(\sigma)+1}}\,(U_\sigma).$$

Ainsi, l'invention utilise, en particulier, la construction -- que nous appellerons "construction GGM" -- proposée par O. Goldreich, S. Goldwasser et S. Micali dans leur article "How to Construct Random Functions", Journal of the ACM, vol. 33(4), pages 792 à 807, 1986. Cette construction suppose l'existence d'un générateur pseudo-aléatoire prédéterminé qui, pour une entrée constituée par un germe $x$ de $m$ bits, produit un mot de sortie $y = (y_0, y_1)$ de $2m$ bits constitué des mots de $m$ bits $y_0 = g_0(x)$ et $y_1 = g_1(x)$, ce qui définit *ipso facto* deux fonctions de $m$ bits vers $m$ bits $g_0$ et $g_1$. La construction GGM définit alors une fonction $F_k$ associée à un secret $k$ de $m$ bits de la façon suivante : à une entrée $v = (v_1, v_2,..., v_n)$ de $n$ bits, la fonction $F_k$ associe le mot de $m$ bits donné par

$$F_k(v) = g_{v_n} \circ ... \, g_{v_2} \circ g_{v_1}\,(k),$$

où, pour $i = 1,..., n$, $g_{v_i} = g_0$ si $v_i = 0$, et $g_{v_i} = g_1$ si $v_i = 1$, et où le symbole "o" désigne la composition de fonctions.

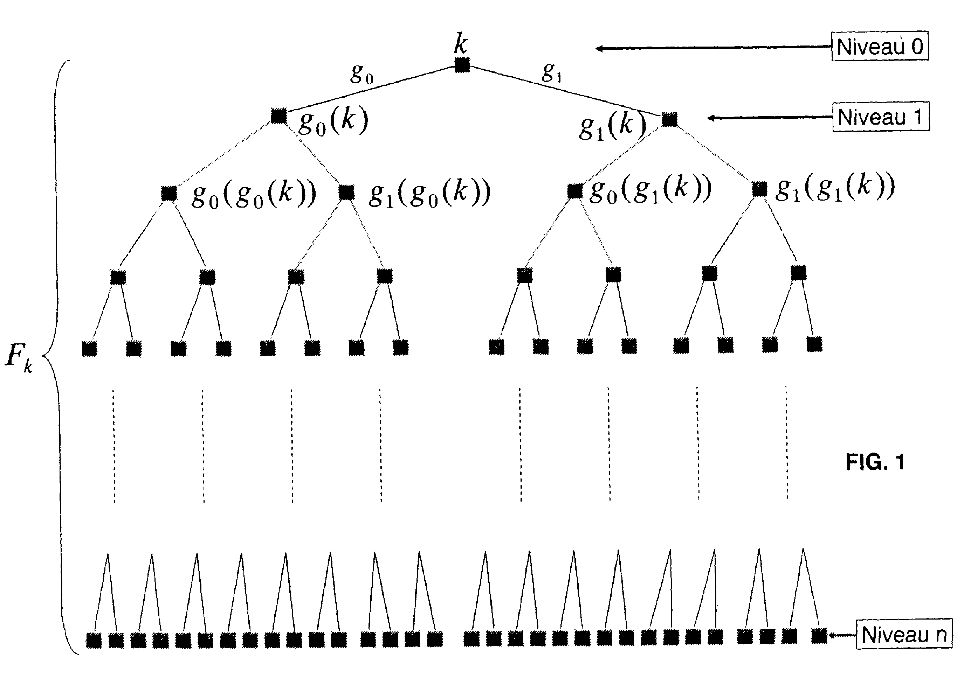

On notera que la composition successive de la fonction $g_0$ ou de la fonction $g_1$ peut être commodément visualisée (voir la **figure 1** ci-dessous) comme une arborescence comportant $n$ niveaux dans laquelle, en partant de la "racine" de l'arborescence située au niveau zéro, on considère des paires de "branches" issues "d'embranchements" de l'arborescence, l'une des branches correspondant à l'indice 0 et l'autre à l'indice 1. Les bits successifs du mot $v$ définissent ainsi un chemin dans l'arborescence. Le nombre d'embranchements est doublé à chaque niveau successif, jusqu'à ce que l'on aboutisse, au niveau n , aux "feuilles" de l'arborescence. On associe alors le secret $k$ à la racine, et le mot $F_k(v)$ à la feuille à laquelle aboutit le chemin défini par le mot $v$.

L'utilisateur concerné par l'invention peut par exemple être un consommateur (tel qu'un abonné) de contenus numériques qui lui sont fournis par une entité de confiance, elle-même constituée, par exemple, par un fournisseur de contenus numériques. On notera que, dans le cadre de la présente invention, l'expression "entité de confiance" pourra désigner indifféremment le concepteur d'un système de diffusion de valeurs numériques selon l'invention, ou un diffuseur de messages chiffrés, ou encore une autorité de contrôle apte à tracer les traîtres parmi les utilisateurs d'un système de diffusion de messages chiffrés mettant en oeuvre un procédé selon l'invention.

Un premier avantage de l'invention est que, si l'on fournit à chaque utilisateur une table $T^U$ qui lui est propre, on "marque" de la sorte le logiciel de chaque utilisateur au moyen d'une empreinte caractéristique permettant, en cas de redistribution illicite de ce logiciel, de tracer le traître à l'origine de cette redistribution. De plus, comme expliqué en détail ci-dessous, l'entité de confiance peut agencer l'ensemble des tables $T^U$ de manière à pouvoir également tracer toute table permettant l'obtention des valeurs dérivées $K_r$, mais obtenue par un pirate en modifiant une table $T^U$ légitime.

Par ailleurs, on notera que l'invention permet d'éviter que la valeur maîtresse $S$ soit mémorisée en tant que telle dans le logiciel fourni à l'utilisateur ; cette valeur maîtresse n'est donc, avantageusement, pas accessible à une analyse en boîte blanche d'un logiciel mettant en oeuvre l'invention. De plus, si l'utilisateur peut évidemment obtenir les valeurs dérivées $K_r$ auxquelles il a droit, il ne peut calculer la valeur maîtresse $S$ dont dépend sa table $T^U$ (c'est-dire, remonter à la racine de l'arborescence), et ce, du fait que les fonctions $g_0$ et $g_1$ sont pseudo-aléatoires, et donc, notamment, à sens unique. Il est donc impossible pour un traître de fabriquer un logiciel contrefaisant qui ne fasse pas appel à une table telle que $T^U$ (et qui soit donc d'apparence différente des logiciels autorisés), mais qui soit néanmoins apte à calculer les valeurs dérivées $K_r$.

Un troisième avantage de l'invention est qu'elle ne requiert qu'une faible complexité de calcul ainsi qu'une faible capacité de stockage de la part des utilisateurs. En particulier, on sait de nos jours réaliser un générateur pseudo-aléatoire dans un dispositif électronique au moyen d'un circuit de taille relativement modeste (en mettant en oeuvre, par exemple, un chiffrement par blocs ou bien un chiffrement à flot).

Enfin, un quatrième avantage de l'invention est qu'elle ne requiert, au niveau de la diffusion de données, qu'un faible volume d'en-têtes (constitué en l'occurrence par le paramètre d'entrée $r$).

Corrélativement, l'invention concerne, en second lieu, un dispositif d'obtention par un utilisateur d'une valeur dérivée $K_r$ de $m$ bits, comprenant un générateur pseudo-aléatoire produisant deux fonctions pseudo-aléatoires $g_0$ et $g_1$ de $m$ bits vers $m$ bits, et permettant d'obtenir, à partir d'un paramètre d'entrée constitué par un mot $r$ de $n$ bits, une valeur dérivée

$$K_r = g_{r_n} \circ \ldots g_{r_2} \circ g_{r_1} (S),$$

où, pour $i = 1,\ldots, n$, $g_{r_i} = g_0$ si $r_i = 0$, et $g_{r_i} = g_1$ si $r_i = 1$, et où $S$ est une valeur maîtresse de $m$ bits. Ledit dispositif est remarquable en ce que ladite valeur maîtresse $S$ n'est pas divulguée audit utilisateur, et en ce qu'il comprend :

- des moyens pour rechercher, parmi un ensemble de mots de $m$ bits $U_j$, où $j = 1,\ldots, p$, enregistrés dans une table $T^U$ et valant

$$U_j = g_{v^{(j)}_{l(j)}} \circ \ldots g_{v^{(j)}_2} \circ g_{v^{(j)}_1} (S),$$

où, pour $i = 1,\ldots, l(j)$, les indices $v^{(j)}_i$ sont des bits prédéterminés, un mot $U_\sigma$ valant

$$U_\sigma = g_{r_{l(\sigma)}} \circ \ldots g_{r_2} \circ g_{r_1} (S),$$

et

- des moyens pour obtenir ladite valeur dérivée $K_r$ en calculant

$$K_r = g_{r_n} \circ \ldots g_{r_{l(\sigma)+1}} (U_\sigma).$$

Les avantages offerts par ce dispositif sont essentiellement les mêmes que ceux offerts par le procédé corrélatif succinctement exposé ci-dessus.

Ce dispositif d'obtention d'une valeur dérivée pourra prendre la forme d'un circuit électronique, notamment au sein d'un décodeur.

Ce dispositif d'obtention d'une valeur dérivée pourra également prendre la forme d'une plateforme logicielle exécutée par un système informatique. Ce système informatique, qui comporte de manière classique une unité centrale de traitement commandant par des signaux une mémoire, ainsi qu'une unité d'entrée et une unité de sortie, peut être utilisé pour exécuter un programme d'ordinateur comportant des instructions pour la mise en oeuvre du procédé d'obtention d'une valeur dérivée selon l'invention.

L'invention vise donc également un programme d'ordinateur téléchargeable depuis un réseau de communication et/ou stocké sur un support lisible par ordinateur et/ou exécutable par un microprocesseur. Ce programme d'ordinateur est remarquable en ce qu'il comprend des instructions pour l'exécution des étapes d'un procédé d'obtention d'une valeur dérivée tel que succinctement exposé ci-dessus, lorsqu'il est exécuté sur un ordinateur.

Les avantages offerts par ce programme d'ordinateur sont essentiellement les mêmes que ceux offerts par ledit procédé.

Comme mentionné ci-dessus, la présente invention trouve notamment son application dans le cadre de la distribution de contenus numériques payants. Mais elle trouve également une application privilégiée dans le cadre de la transmission de messages chiffrés ; on pourra ainsi, par exemple, avantageusement appliquer l'invention à n'importe quel algorithme classique de chiffrement symétrique fiable et rapide, tel que l'AES (initiales des mots anglais "*Advanced Encryption Standard*" signifiant "Norme de Chiffrement Avancé").

C'est pourquoi l'invention concerne également un procédé de déchiffrement. Ce procédé est remarquable en ce qu'il utilise comme clé de déchiffrement une valeur pouvant être obtenue à partir d'au moins une valeur dérivée $K_r$, cette dernière étant calculée au moyen d'un procédé d'obtention d'une valeur dérivée tel que décrit succinctement ci-dessus, pour déchiffrer un cryptogramme $C_r(M)$ reçu conjointement audit paramètre d'entrée r, où M est un contenu en clair et $C_r$ un algorithme de chiffrement prédéterminé.

De même, l'invention concerne également un procédé d'authentification. Ce procédé d'authentification est remarquable en ce que ladite première entité utilise comme clé secrète d'authentification auprès d'une entité vérificatrice une valeur pouvant être obtenue à partir d'au moins une valeur dérivée $K_r$, cette dernière étant calculée au moyen d'un procédé d'obtention d'une valeur dérivée tel que décrit succinctement ci-dessus, après réception dudit paramètre d'entrée r destiné à une telle authentification.

L'invention concerne également un programme d'ordinateur téléchargeable depuis un réseau de communication et/ou stocké sur un support lisible par ordinateur et/ou exécutable par un microprocesseur, ledit programme étant remarquable en ce qu'il comprend des instructions pour l'exécution des étapes d'un procédé de déchiffrement tel que décrit succinctement ci-dessus, ou d'un procédé d'authentification tel que décrit succinctement ci-dessus, lorsqu'il est exécuté sur un ordinateur.

L'invention vise aussi un support d'informations lisible par un ordinateur, et comportant des instructions d'un programme d'ordinateur tel que décrit succinctement ci-dessus.

D'autres aspects et avantages de l'invention apparaîtront à la lecture de la description détaillée de modes de réalisation particuliers, donnés ci-dessous à titre d'exemples non limitatifs. La description se réfère aux dessins qui l'accompagnent, dans lesquels :

- la figure 1 est un schéma synoptique illustrant la construction GGM classique au moyen d'une arborescence, et

- la figure 2 représente une arborescence, et plusieurs recouvrements possibles de cette arborescence.

Dans le cadre de la présente invention, on utilisera le mot "noeud" pour désigner la paire d'informations attachée à un embranchement et constituée par :

- la position, que nous appellerons "étiquette du noeud", de cet embranchement dans l'arborescence, et
- le mot de m bits, que nous appellerons "valeur du noeud", attaché à cet embranchement.

Conformément à l'invention, chaque utilisateur U se voit attribuer une table $T^U$ qui lui est propre. Une telle table est une collection de p noeuds, où p est un entier strictement positif, qui peut être avantageusement très grand, comme expliqué ci-dessous. Par ailleurs, cet entier p peut être soit constant, soit différent d'un utilisateur à un autre.

Ainsi, la table $T^U$ contient, en premier lieu, p mots $U_1$, $U_2$,...,$U_p$ de m bits, où, par exemple, m = 128, selon la taille de clé souhaitée (la valeur dérivée $K_r$ obtenue au moyen du procédé selon l'invention ayant elle aussi une longueur de m bits) ; ces mots sont les "valeurs" des noeuds.

La table $T^U$ contient, en second lieu, pour chacune de ces valeurs $U_j$, "l'étiquette" correspondante, c'est-à-dire un mot

$$v^{(j)} = (v^{(j)}{}_1, v^{(j)}{}_2, ..., v^{(j)}{}_{l(j)})$$

de $l(j)$ bits, où $l(j)$ est un entier strictement positif, tel que :

$$U_j = g_{v^{(j)}_{l(j)}} \circ \cdots g_{v^{(j)}_2} \circ g_{v^{(j)}_1} (S).$$

Dans cette expression, S désigne une valeur (de m bits) dite "maîtresse", en ce sens qu'elle est commune à un certain ensemble d'utilisateurs {U} ; conformément à l'invention, cette valeur maîtresse S est une clé secrète en ce sens que sa valeur n'est pas divulguée à ces utilisateurs, pour les raisons expliquées ci-dessus. On notera que les étiquettes ne sont pas nécessairement stockées dans la table $T^U$ sous la forme explicite de mots $v^{(j)}$, la seule exigence ici étant de pouvoir, à partir de la table $T^U$, retrouver l'étiquette associée à toute valeur $U_j$ stockée dans cette table.

Si l'on se représente ces noeuds, conformément à la figure 1, comme situés sur une arborescence, alors le mot $v^{(j)}$ représente le chemin à suivre à partir de la racine pour atteindre le noeud concerné, et l'entier $l(j)$ représente le "niveau" dans l'arborescence auquel se situe le noeud. Par extension, on parlera également de noeud pour telle ou telle feuille (niveau $n$ ) de l'arborescence, lorsque la valeur associée à cette feuille est enregistrée dans la table $T^U$. On notera que, de préférence, l'entier $l(j)$ varie généralement d'une valeur de $j$ à une autre, autrement dit les noeuds de la table sont généralement, de préférence, situés mutuellement à des niveaux différents de l'arborescence.

L'arborescence à $n$ niveaux est donc constituée, pour un utilisateur $U$ donné, d'une part de $p$ noeuds, et d'autre part d'embranchements et de feuilles pour lesquels aucune "valeur" n'est enregistrée dans sa table $T^U$.

Nous allons à présent expliquer le fonctionnement général du procédé d'obtention d'une valeur dérivée selon l'invention, du point de vue d'un utilisateur $U$ , en décrivant un mode de réalisation. Cet utilisateur peut, par exemple, être un consommateur de données numériques qui lui sont envoyées, sous forme chiffrée, par un fournisseur de données numériques.

Pour pouvoir accéder à ces données numériques, l'utilisateur doit mettre en oeuvre une ou plusieurs clés $K_r$, qui sont appelées "valeurs dérivées" dans le cadre de l'invention. A chaque feuille de l'arborescence correspond une valeur respective de la clé $K_r$. Certaines de ces valeurs peuvent, le cas échéant, être enregistrées dans la table $T^U$ (cas des noeuds de niveau $n$), mais, de manière générale, la valeur dérivée $K_r$ requise à un moment donné pour accéder aux données numériques est obtenue au moyen du procédé selon l'invention.

Les étapes du présent mode de réalisation sont les suivantes.

A l'étape P1, la plateforme informatique de l'utilisateur $U$ reçoit, sur un canal de diffusion, un paramètre d'entrée $r$.

A l'étape P2, la plateforme recherche si la table $T^U$ contient un noeud étiqueté par le mot (à un bit) $v = (r_1)$ parmi les deux embranchements du niveau 1 de l'arborescence. Si ce n'est pas le cas, la plateforme recherche si la table $T^U$ contient un noeud étiqueté par le mot (à deux bits) $v = (r_1, r_2)$ parmi les quatre embranchements du niveau 2 de l'arborescence. Si ce n'est pas le cas, la plateforme recherche si la table $T^U$ contient un noeud étiqueté par le mot (à trois bits) $v = (r_1, r_2, r_3)$ parmi les huit embranchements du niveau 3 de l'arborescence, et ainsi de suite. Cette procédure de recherche s'arrête dès que la plateforme trouve dans la table $T^U$, pour un certain niveau θ, un noeud étiqueté par le mot $v = (r_1, r_2,..., r_1)$. Il existe alors un entier σ tel que $1 \le \sigma \le p$, et $l(\sigma)=\theta$.

A l'étape P3, la plateforme lit dans la table $T^U$ la valeur $U_\sigma$ correspondante, et calcule la valeur dérivée

$$ K_r = g_{r_n} \circ ... g_{r_{\theta+1}} (U_\sigma). $$

Ce calcul met successivement en oeuvre des sous-étapes faisant chacune appel à un générateur pseudo-aléatoire prédéterminé, qui fournit, à la première sous-étape, les fonctions $g_0$ et $g_1$ du mot $U_\sigma$, puis, aux sous-étapes suivantes, les fonctions $g_0$ et $g_1$ du mot de $m$ bits précédemment calculé. De manière connue, un générateur pseudo-aléatoire peut utiliser un mot d'entrée soit comme graine, soit comme vecteur d'initialisation (on rappelle qu'un "vecteur d'initialisation" est un paramètre permettant d'utiliser plusieurs fois la même graine pour engendrer plusieurs suites de nombres pseudo-aléatoires distinctes). A chaque sous-étape, on choisit entre le mot résultant de l'application de la fonction $g_0$ et le mot résultant de l'application de la fonction $g_1$, selon la valeur du bit du paramètre d'entrée $r$ correspondant à cette sous-étape.

On voit ainsi, sur la base de ce mode de réalisation, que l'invention est avantageusement conçue de telle sorte que les utilisateurs aboutissent tous à la même valeur dérivée $K_r$ (pour un paramètre d'entrée r donné), bien que ces utilisateurs soient équipés de tables $T^U$ distinctes deux à deux.

Plus précisément, chaque utilisateur est équipé d'un recouvrement différent de la même arborescence. Par "recouvrement", on veut dire que, pour chaque table $T^U$ et pour n'importe quelle feuille, soit la valeur $K_r$ elle-même associée à cette feuille est enregistrée dans la table $T^U$, soit il existe un chemin le long de l'arborescence qui permet de "remonter" depuis cette feuille jusqu'à un noeud. De plus, un recouvrement est dit "sans redondance" si toute feuille qui n'est pas un noeud n'est ainsi reliée qu'à un seul noeud situé à un niveau inférieur à $n$.

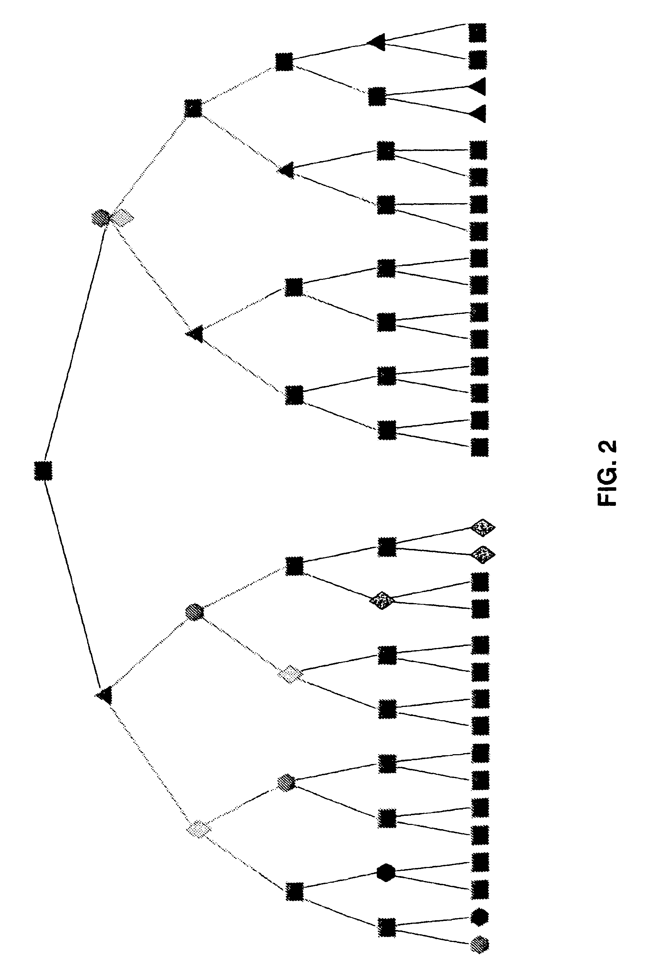

Cette notion de recouvrement, différent pour chaque utilisateur, est illustrée au moyen d'un exemple (fourni ici purement à titre d'illustration), représenté sur la **figure 2.** Dans cet exemple, $n = 5$, et l'on considère 3 utilisateurs (représentés respectivement par des triangles, des losanges et des hexagones), munis chacun d'un recouvrement sans redondance comportant $p = 6$ noeuds. Par exemple, les étiquettes correspondant aux hexagones sont les suivantes :

$$v^{(1)} = (1), \ v^{(2)} = (0,1), \ v^{(3)} = (0,0,1), \ v^{(4)} = (0,0,0,1),$$

$$v^{(5)} = (0,0,0,0,0), \text{ et } v^{(6)} = (0,0,0,0,1).$$

Le logiciel de chaque utilisateur est donc identifiable par le recouvrement enregistré dans sa table $T^U$ et qui est propre à cet utilisateur. Ce logiciel est ainsi "marqué", ce qui permet, en cas de distribution illicite de ce logiciel, de tracer le traître à l'origine de cette distribution. Le procédé et le système selon l'invention sont donc "traçables".

On va à présent décrire brièvement, dans le cadre de la protection contre les attaques en boîte-blanche, les précautions qu'un concepteur de logiciels peut prendre pour empêcher qu'un pirate, ou une coalition de pirates, ne modifie un logiciel selon l'invention de manière à échapper à cette traçabilité.

On observera tout d'abord que, pour des valeurs pratiques de $n$ et de $m$, il est impossible pour un pirate de calculer et stocker l'ensemble des valeurs dérivées, en remplacement de sa table $T^U$. Si l'on prend en effet, disons, $n$ =128, alors le nombre de feuilles de l'arborescence est égal à $2^{128}$ ; si, de plus, on prend, disons, $m = 128$, alors chacune de ces feuilles est associée à une valeur dérivée respective de 128 bits ; le stockage de l'ensemble des valeurs dérivées requiert donc une capacité de $2^{135}$ bits, ce qui dépasse largement les capacités des disques durs actuels.

Cela étant, un pirate, ou une coalition de pirates pourrait par exemple calculer une table dans laquelle les noeuds seraient, comme précédemment, tous situés à un même niveau de l'arborescence, mais en choisissant un niveau inférieur à $n$. Mais comme le nombre d'embranchements double chaque fois que le niveau augmente d'une unité, le pirate ne pourra choisir pour ce faire qu'un niveau assez petit, compte tenu de la capacité de stockage de sa plateforme. Pour empêcher une telle fraude, chaque table $T^U$ devra donc être conçue de telle sorte qu'elle comprenne au moins un noeud situé à un niveau assez grand de l'arborescence (on notera qu'en raison du caractère à sens unique des fonctions $g_0$ et $g_1$, un pirate ne peut remplacer un tel noeud par des noeuds situés à niveau plus petit).

Enfin, on prévoira de préférence que l'accès aux données numériques fournies par le fournisseur exige l'utilisation simultanée d'un nombre substantiel de valeurs dérivées $K_r$ (obtenues successivement à partir d'une pluralité de paramètres d'entrée $r$), au lieu d'une seule. Par exemple, l'accès aux données numériques pourra faire appel à la somme bit à bit de plusieurs valeurs dérivées, ou à un haché de la concaténation de plusieurs valeurs dérivées. Grâce à de telles dispositions, on évite qu'un pirate, pour échapper au traçage, ne sacrifie délibérément les noeuds dont dérivent un nombre relativement faible de feuilles, en comptant sur le fait que l'accès aux données numériques n'en sera que rarement perturbé.

Si l'on prend de telles précautions, on peut, par exemple, attribuer à chaque utilisateur environ $p = 2^{15}$ noeuds, tous situés entre, par exemple, les niveaux 15 et 115 d'un arbre comportant $n = 128$ niveaux. On peut alors utiliser une même arborescence pour diffuser des données numériques à un ensemble d'utilisateurs comprenant, par exemple, quelques dizaines de millions d'individus. Avec des clés de $m = 128$ bits, la capacité de mémoire qui est alors requise dans chaque plateforme informatique (telle qu'un décodeur) pour stocker la table $T^U$ n'est que d'environ 500 kilooctets.

Comme indiqué ci-dessus, l'invention vise aussi un programme d'ordinateur téléchargeable depuis un réseau de communication comprenant des instructions pour l'exécution des étapes de l'un quelconque des procédés selon l'invention lorsqu'il est exécuté sur un ordinateur.

Ce programme peut utiliser n'importe quel langage de programmation, et être sous la forme de code source, code objet, ou de code intermédiaire entre code source et code objet, tel qu'un code partiellement compilé, ou sous toute autre forme souhaitable.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette ("*floppy disk*" en anglais) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

En variante, le support d'informations peut être un circuit intégré dans lequel le programme est incorporé, le circuit étant adapté pour exécuter ou pour être utilisé dans l'exécution de l'un quelconque des procédés selon l'invention.

**Revendications**

1. Procédé de transmission de données chiffrées comprenant une phase d'obtention par un utilisateur d'une clé de déchiffrement $K_r$ de $m$ bits, au cours de laquelle, étant donné deux fonctions pseudo-aléatoires $g_0$ et $g_1$ de $m$ bits vers $m$ bits, ledit utilisateur obtient, à partir d'un paramètre d'entrée constitué par un mot $r$ de $n$ bits, la clé de déchiffrement

$$K_r = g_{r_n} \circ \dots g_{r_2} \circ g_{r_1}(S),$$

où, pour $i = 1,\dots, n$, $g_{r_i} = g_0$ si $r_i = 0$, et $g_{r_i} = g_1$ si $r_i = 1$, et où $S$ est une valeur maîtresse de $m$ bits, **caractérisé en ce que** ladite valeur maîtresse S n'est pas divulguée audit utilisateur, et **en ce que** la phase d'obtention de la clé de déchiffrement comprend les étapes suivantes :

- recherche, parmi un ensemble de mots de $m$ bits $U_j$, où $j = 1,\dots, p$, enregistrés dans une arborescence $T^U$ et valant

$$U_j = g_{v_{l(j)}^{(j)}} \circ \dots g_{v_2^{(j)}} \circ g_{v_1^{(j)}}(S),$$

où, pour $i = 1,\dots, l(j)$, les indices $v_i^{(j)}$ sont des bits prédéterminés qui forment, pour chacune de ces valeurs $U_j$, une étiquette correspondante de la forme $v^{(j)}=(v^{(j)}1,v^{(j)}2,\dots,v^{(j)}1_{(j)})$

$$v^{(j)} = (v^{(j)}{}_1, v^{(j)}{}_2, \dots, v^{(j)}{}_{l(j)})$$

d'un mot $U_\sigma$ valant

$$U_\sigma = g_{r_{l(\sigma)}} \circ \dots g_{r_2} \circ g_{r_1}(S),$$

où, $1 \leq l(\sigma) \leq n$ représente un niveau de l'arborescence $T^U$ où se situe le mot $U_\sigma$, et
- obtention de laditeclé de déchiffrement $K_r$ en calculant

$$K_r = g_{r_n} \circ \dots g_{r_{l(\sigma)+1}}(U_\sigma).$$

2. Procédé de déchiffrement, **caractérisé en ce qu'**il utilise comme clé de déchiffrement une valeur pouvant être obtenue à partir d'au moins la clé de déchiffrement $K_r$, obtenue selon la phase d'obtention d'une clé de déchiffrement du procédé selon la revendication 1, pour déchiffrer un cryptogramme $C_r(M)$ reçu conjointement audit paramètre d'entrée $r$, où $M$ est un contenu en clair et $C_r$ un algorithme de chiffrement prédéterminé.

3. Procédé d'authentification, **caractérisé en ce que** ladite première entité utilise comme clé secrète d'authentification auprès d'une entité vérificatrice une valeur pouvant être obtenue à partir d'au moins la clé de déchiffrement $K_r$, obtenue selon la phase d'obtention d'une clé de déchiffrement du procédé selon la revendication 1, après réception dudit paramètre d'entrée $r$ destiné à une telle authentification.

**4.** Dispositif d'obtention par un utilisateur d'une clé de déchiffrement $K_r$ de $m$ bits adaptée à une transmission de données chiffrées, comprenant un générateur pseudo-aléatoire produisant deux fonctions pseudo-aléatoires $g_0$ et $g_1$ de $m$ bits vers $m$ bits, et permettant d'obtenir, à partir d'un paramètre d'entrée constitué par un mot $r$ de $n$ bits, une clé de déchiffrement

$$K_r = g_{r_n} \circ \ldots g_{r_2} \circ g_{r_1}(S),$$

où, pour i =1,..., $n$, $g_{ri} = g_0$ si $r_i$ = 0 , et $g_{r_i} = g_1$ si $r_i$ = 1, et où $S$ est une valeur maîtresse de $m$ bits, **caractérisé en ce que** ladite valeur maîtresse $S$ n'est pas divulguée audit utilisateur, et **en ce qu'**il comprend :

- des moyens pour rechercher, parmi un ensemble de mots de $m$ bits $U_j$, où $j$ = 1,..., $p$, enregistrés dans une arborescence $T^U$ et valant

$$U_j = g_{v_{l(j)}^{(j)}} \circ \ldots g_{v_2^{(j)}} \circ g_{v_1^{(j)}}(S),$$

où, pour i =1,...,l(j), les indices $v_i^{(j)}$ sont des bits prédéterminés qui forment, pour chacune de ces valeurs $U_j$, une étiquette correspondante de la forme $v^{(j)}=(v^{(j)}1,v^{(j)}2,...,v^{(j)}1_{(j)})$

$$v^{(j)} = (v^{(j)}{}_1, v^{(j)}{}_2, ..., v^{(j)}{}_{l(j)})$$

un mot $U_\sigma$ valant

$$U_\sigma = g_{r_{l(\sigma)}} \circ \ldots g_{r_2} \circ g_{r_1}(S),$$

où, $1 \leq l(\sigma) \leq n$ représente un niveau de l'arborescence $T^U$ où se situe le mot $U_\sigma$, et
- des moyens pour obtenir ladite clé de déchiffrement $K_r$ en calculant

$$K_r = g_{r_n} \circ \ldots g_{r_{l(\sigma)+1}}(U_\sigma).$$

**5.** Circuit électronique, **caractérisé en ce qu'**il comprend un dispositif d'obtention d'une valeur dérivée selon la revendication 4.

**6.** Décodeur, **caractérisé en ce qu'**il comprend un circuit électronique selon la revendication 5.

**7.** Programme d'ordinateur téléchargeable depuis un réseau de communication et/ou stocké sur un support lisible par ordinateur et/ou exécutable par un microprocesseur, **caractérisé en ce qu'**il comprend des instructions pour l'exécution des étapes d'un procédé de transmission de données chiffrées selon la revendication 1, ou d'un procédé de déchiffrement selon la revendication 2, ou d'un procédé d'authentification selon la revendication 3, lorsqu'il est exécuté sur un ordinateur.

**8.** Support d'informations lisible par un ordinateur, et comportant des instructions d'un programme d'ordinateur selon la revendication 7.

**Claims**

1. Method for transmitting encrypted data comprising a phase of obtaining by a user a decryption key $K_r$ of $m$ bits, during which, given two pseudo-random functions $g_0$ and $g_1$ from $m$ bits to $m$ bits, said user obtains, on the basis of an input parameter consisting of a word $r$ of $n$ bits, the decryption key

$$K_r = g_{r_n} \circ \ldots g_{r_2} \circ g_{r_1}(S),$$

where, for $i = 1,\ldots, n$, $g_{r_i} = g_0$ if $r_i = 0$, and $g_{r_i} = g_1$ if $r_i = 1$, and where $S$ is a master value of $m$ bits, **characterized in that** said master value $S$ is not disclosed to said user, and **in that** the phase of obtaining the decryption key comprises the following steps:

- searching, from among a set of words of $m$ bits $U_j$, where $j = 1,\ldots, p$, recorded in a tree $T^U$ and equal to

$$U_j = g_{v_{l(j)}^{(j)}} \circ \ldots g_{v_2^{(j)}} \circ g_{v_1^{(j)}}(S),$$

where, for $i = 1,\ldots, l(j)$, the indices $v_i^{(j)}$ are predetermined bits which form, for each of these values $U_j$, a corresponding label of the form $v^{(j)} = (v^{(j)}_1, v^{(j)}_2, \ldots, v^{(j)}_{1(j)})$, of a word $U_\sigma$ equal to

$$U_\sigma = g_{r_{l(\sigma)}} \circ \ldots g_{r_2} \circ g_{r_1}(S),$$

where, $1 \leq l(\sigma) \leq n$ represents a level of the tree $T^U$ where the word $U_\sigma$ is situated, and
- obtaining said decryption key $K_r$ by calculating

$$K_r = g_{r_n} \circ \ldots g_{r_{l(\sigma)+1}}(U_\sigma).$$

2. Method of decryption, **characterized in that** it uses as decryption key a value that may be obtained on the basis of at least the decryption key $K_r$, obtained according to the phase of obtaining a decryption key of the method according to Claim 1, so as to decrypt a cryptogram $C_r(M)$ received jointly with said input parameter $r$, where $M$ is a plaintext content and $C_r$ a predetermined encryption algorithm.

3. Method of authentication, **characterized in that** said first entity uses as secret key for authentication with a verifying entity a value that may be obtained on the basis of at least the decryption key $K_r$, obtained according to the phase of obtaining a decryption key of the method according to Claim 1, after reception of said input parameter $r$ intended for such authentication.

4. Device for the obtaining by a user of a decryption key $K_r$ of $m$ bits suitable for a transmission of encrypted data, comprising a pseudo-random generator producing two pseudo-random functions $g_0$ and $g_1$ from $m$ bits to $m$ bits, and making it possible to obtain, on the basis of an input parameter consisting of a word r of $n$ bits, a decryption key

$$K_r = g_{r_n} \circ \ldots g_{r_2} \circ g_{r_1}(S),$$

where, for $i = 1,\ldots, n$, $g_{r_i} = g_0$ if $r_i = 0$, and $g_{r_i} = g_1$ if $r_i = 1$, and where $S$ is a master value of $m$ bits, **characterized in that** said master value $S$ is not disclosed to said user, and **in that** it comprises:

- means for searching, from among a set of words of $m$ bits $Uj$, where $j = 1,\ldots, p$, recorded in a tree $T^U$ and equal to

$$U_j = g_{v_{l(j)}^{(j)}} \circ ... g_{v_2^{(j)}} \circ g_{v_1^{(j)}} (S),$$

where, for $i = 1,...,l(j)$, the indices $v_i^{(j)}$ are predetermined bits which form, for each of these values $U_j$, a corresponding label of the form $v^{(j)}=(v^{(j)}_1, v^{(j)}_2,...,v^{(j)}_{l(j)})$, for a word $U_\sigma$ equal to

$$U_\sigma = g_{r_{l(\sigma)}} \circ ... g_{r_2} \circ g_{r_1} (S),$$

where, $1 \leq l(\sigma) \leq n$ represents a level of the tree $T^U$ where the word $U_\sigma$ is situated, and
- means for obtaining said decryption key $K_r$ by calculating

$$K_r = g_{r_n} \circ ... g_{r_{l(\sigma)+1}} (U_\sigma).$$

5. Electronic circuit, **characterized in that** it comprises a device for obtaining a derived value according to Claim 4.

6. Decoder, **characterized in that** it comprises an electronic circuit according to Claim 5.

7. Computer program downloadable from a communication network and/or stored on a medium readable by computer and/or executable by a microprocessor, **characterized in that** it comprises instructions for the execution of the steps of a method for transmitting encrypted data according to Claim 1, or of a method of decryption according to Claim 2, or of a method of authentication according to Claim 3, when it is executed on a computer.

8. Information medium readable by a computer, and comprising instructions of a computer program according to Claim 7.

**Patentansprüche**

1. Verfahren zur Übertragung von verschlüsselten Daten, das eine Phase des Erhalts durch einen Benutzer eines Entschlüsselungsschlüssels $K_r$ von m Bits aufweist, während dem, bei zwei pseudozufälligen Funktionen $g_0$ und $g_1$ von m Bits zu m Bits, der Benutzer ausgehend von einem Eingangsparameter, der aus einem Wort r von n Bits besteht, den Entschlüsselungsschlüssel

$$K_r = g_{r_n} \circ ... g_{r_2} \circ g_{r_1}(S)$$

erhält, wobei gilt, für i = 1, ..., n, $g_{r_i} = g_0$, wenn $r_i = 0$, und $g_{r_i} = g_1$, wenn $r_i = 1$, und wobei S ein Hauptwert von m Bits ist, **dadurch gekennzeichnet, dass** der Hauptwert S dem Benutzer nicht offenbart wird, und dass die Phase des Erhalts des Entschlüsselungsschlüssels die folgenden Schritte aufweist:

- Suche, unter einer Einheit von Wörtern von m Bits $U_j$, wobei gilt j = 1, ..., p, gespeichert in einem Suchbaum $T^U$ und mit dem Wert

$$U_j = g_{v_{l(j)}^{(j)}} \circ ... g_{v_2^{(j)}} \circ g_{v_1^{(j)}}(S)$$

wobei, für i = 1, ..., l(j), die Indices $v_i^{(j)}$ vorbestimmte Bits sind, die für jeden dieser Werte $U_j$, einen entsprechenden Kennsatz der Form $v^{(j)} = v^{(j)} = (v^{(j)}_1, v^{(j)}_2, ..., v^{(j)}_{1(j)})$, bilden,
eines Worts $U_\sigma$ mit dem Wert

$$U_\sigma = g_{r_{l(\sigma)}} \circ \ldots g_{r_2} \circ g_{r_1}(S)$$

wobei $1 \leq 1(\sigma) \leq n$ einen Bereich des Suchbaums $T^U$ darstellt, in dem sich das Wort $U_\sigma$ befindet, und
- Erhalt des Entschlüsselungsschlüssels $K_r$ durch die Berechnung von

$$K_r = g_{r_n} \circ \ldots g_{r_{l(\sigma)+1}}(U_\sigma).$$

2. Entschlüsselungsverfahren, **dadurch gekennzeichnet, dass** es als Entschlüsselungsschlüssel einen Wert verwendet, der ausgehend von mindestens dem Entschlüsselungsschlüssel $K_r$ erhalten werden kann, der gemäß der Phase des Erhalts eines Entschlüsselungsschlüssels des Verfahrens nach Anspruch 1 erhalten wird, um ein Kryptogramm $C_r(M)$ zu entschlüsseln, das zusammen mit dem Eingangsparameter r empfangen wird, wobei M ein unverschlüsselter Inhalt und $C_r$ ein vorbestimmter Verschlüsselungsalgorithmus ist.

3. Authentifizierungsverfahren, **dadurch gekennzeichnet, dass** die erste Entität als geheimen Authentifizierungsschlüssel bei einer überprüfenden Entität einen Wert verwendet, der ausgehend von mindestens dem Entschlüsselungsschlüssel $K_r$ erhalten werden kann, der gemäß der Phase des Erhalts eines Entschlüsselungsschlüssels des Verfahrens nach Anspruch 1 nach Empfang des Eingangsparameters r erhalten wird, der für eine solche Authentifizierung bestimmt ist.

4. Vorrichtung zum Erhalt durch einen Benutzer eines Entschlüsselungsschlüssels $K_r$ von m Bits, der für eine Übertragung von verschlüsselten Daten geeignet ist, die einen Pseudozufallsgenerator enthält, der zwei pseudozufällige Funktionen $g_0$ und $g_1$ von m Bits zu m Bits erzeugt und es ermöglicht, ausgehend von einem Eingangsparameter, der aus einem Wort r von n Bits besteht, einen Entschlüsselungsschlüssel

$$K_r = g_{r_n} \circ \ldots g_{r_2} \circ g_{r_1}(S)$$

zu erhalten, wobei gilt, für i = 1, ..., n, $g_{r_i} = g_0$, wenn $r_i = 0$, und $g_{r_i} = g_1$ wenn $r_i = 1$, und wobei S ein Hauptwert von m Bits ist,
**dadurch gekennzeichnet, dass** der Hauptwert S dem Benutzer nicht offenbart wird, und dass sie enthält:

- Einrichtungen, um unter einer Einheit von Wörtern von m Bits $U_j$, wobei gilt j = 1, ..., p, gespeichert in einem Suchbaum $T^U$ und mit dem Wert

$$U_j = g_{v^{(j)}_{l(j)}} \circ \ldots g_{v^{(j)}_2} \circ g_{v^{(j)}_1}(S)$$

wobei, für i = 1, ..., 1(j), die Indices $v_i^{(j)}$ vorbestimmte Bits sind, die für jeden dieser Werte $U_j$, einen entsprechenden Kennsatz der Form $v^{(j)} = v^{(j)} = (v^{(j)}_1, v^{(j)}_2, ..., v^{(j)}_{1(j)})$, bilden,
ein Wort $U_\sigma$ mit dem Wert

$$U_{\sigma} = g_{r_{l(\sigma)}} \circ \ldots g_{r_2} \circ g_{r_1}(S)$$

zu suchen, wobei $1 \leq l(\sigma) \leq n$ einen Bereich des Suchbaums $T^U$ darstellt, in dem sich das Wort $U_{\sigma}$ befindet, und

- Einrichtungen, um den Entschlüsselungsschlüssel $K_r$ durch die Berechnung von

$$K_r = g_{r_n} \circ \ldots g_{r_{l(\sigma)+1}}(U_{\sigma})$$

zu erhalten.

5. Elektronischer Schaltkreis, **dadurch gekennzeichnet, dass** er eine Vorrichtung zum Erhalt eines abgeleiteten Werts nach Anspruch 4 aufweist.

6. Decodierer, **dadurch gekennzeichnet, dass** er einen elektronischen Schaltkreis nach Anspruch 5 enthält.

7. Computerprogramm, das von einem Kommunikationsnetzwerk heruntergeladen und/oder auf einem computerlesbaren Träger gespeichert und/oder von einem Mikroprozessor ausgeführt werden kann, **dadurch gekennzeichnet, dass** es Anweisungen zur Ausführung der Schritte eines Verfahrens zur Übertragung verschlüsselter Daten nach Anspruch 1 oder eines Entschlüsselungsverfahrens nach Anspruch 2 oder eines Authentifizierungsverfahrens nach Anspruch 3 enthält, wenn es in einem Computer ausgeführt wird.

8. Computerlesbarer Datenträger, der Anweisungen eines Computerprogramms nach Anspruch 7 aufweist.

FIG. 1

FIG. 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1634405 A

**Littérature non-brevet citée dans la description**

- Revisiting Software Protection. **P.C. VAN OOR-SCHOT.** Information Security. Springer-Verlag, 2003, 1-13
- Tracing Traitors. **B. CHOR ; A. FIAT ; M. NAOR.** Advances in Cryptology - Crypto'94, Lecture Notes in Computer Science. Springer-Verlag, 1994, vol. 839, 257-270
- White-Box Cryptography and an AES Implementation. **S. CHOW ; P. EISEN ; H. JOHNSON ; P.C. VAN OORSCHOT.** International Workshop on Selected Areas in Cryptography. Springer, 2003, 250-270
- A White-Box DES Implementation for DRM Applications. Second ACM Workshop on Digital Rights Management. Springer, 2003, 1-15
- **O. GOLDREICH ; S. GOLDWASSER ; S. MICALI.** How to Construct Random Functions. *Journal of the ACM,* 1986, vol. 33 (4), 792-807